Europäisches Patentamt

European Patent Office

Office européen des brevets

(19)

(11) Veröffentlichungsnummer: **0 160 892**
**B1**

(12) # EUROPÄISCHE PATENTSCHRIFT

(45) Veröffentlichungstag der Patentschrift:
**10.01.90**

(51) Int. Cl.⁴: **B 60 R 22/34**

(21) Anmeldenummer: **85105010.4**

(22) Anmeldetag: **25.04.85**

(54) **Federkapsel.**

(30) Priorität: **09.05.84 DE 3417029**

(43) Veröffentlichungstag der Anmeldung:
**13.11.85 Patentblatt 85/46**

(45) Bekanntmachung des Hinweises auf die Patenterteilung:
**10.01.90 Patentblatt 90/2**

(84) Benannte Vertragsstaaten:
**AT BE DE FR GB IT NL SE**

(56) Entgegenhaltungen:
**GB-A- 2 076 635**
**US-A- 4 159 809**
**US-A- 4 285 478**

(73) Patentinhaber: **AUTOLIV GmbH, Otto-Hahn-Strasse 4,
D-2200 Elmshorn (DE)**

(72) Erfinder: **Essler, Karl Hermann, Koppeldamm 20,
D-2082 Tornesch (DE)**
Erfinder: **Grunewald, Hans Joachim, Dipl.-Ing.,
Moordamm 5, D-2207 Kiebitzreihe (DE)**

(74) Vertreter: **Meyer, Ludgerus, Patentanwälte Meyer,
Stach, Vonnemann Jungfernstieg 38,
D-2000 Hamburg 36 (DE)**

**Beschreibung**

Die Erfindung betrifft eine Federkapsel für eine Sicherheitsgurt-Aufspulvorrichtung mit einer zwischen den Seitenteilen einer U-förmig gewinkelten Grundplatte drehbar gelagerten Gurt-Aufspulwelle, wobei die Federkapsel eine am Seitenteil der Grundplatte anzubringende Lagerplatte mit einer mittigen Öffnung, eine Abdeckkappe und eine zwischen diesen angeordnete Spiralfeder zum Eingriff mit dem die Öffnung der Lagerplatte durchsetzenden Endabschnitt der Aufspulwelle aufweist. Eine solche Federkapsel ist aus der US-A-4 285 478 bekannt. Bei den bekannten Sicherheitsgurt-Aufspulvorrichtungen ist an einem Seitenteil der Grundplatte eine Lagerplatte montiert, durch deren mittige Öffnung der mit einem durchgehenden Schlitz versehene Endabschnitt der Aufspulwelle vorsteht. Die Lagerplatte weist einen unregelmäßig geformten Wandsteg auf, in dessen Bereich eine Haltevorrichtung für den äußeren Endabschnitt der zum automatischen Aufwickeln des Sicherheitsgurts dienenden Spiralfeder vorgesehen ist. Bei der Montage der Aufspulvorrichtung wird nach Anbringen der Lagerplatte die Spiralfeder mit ihrem inneren Endabschnitt in den durchgehenden Schlitz des Aufspulwellen-Endabschnitts und mit ihrem äußeren Endabschnitt in die Halterungsvorrichtung eingeführt und dort festgelegt. Nachfolgend wird eine die Lagerplatte und die Spiralfeder übergreifende Abdeckkappe angebracht und mit dem Seitenteil der Grundplatte verschraubt. Die so montierte Aufspulvorrichtung wird bei gespannter Spiralfeder durch Einsetzen eines speziellen, die Drehung der Aufspulwelle blockierenden Transporthakens gesichert und bis zur Montage des Gurtes gelagert.

Die Montage der Spiralfeder auf die Lagerplatte und die Aufspulwelle erfolgt von Hand, was nicht nur zeitraubend, sondern auch in erheblichem Maße unfallgefährdet ist. Die Zwischenlagerung der Aufspulvorrichtung bei gespannter Spiralfeder hat zum einen eine unnötige Ermüdung der Feder schon vor dem eigentlichen Einsatz der Aufspulvorrichtung, zum anderen erhöhten Aufwand wegen der Notwendigkeit des Transporthakens, der zudem von Hand eingesetzt werden muß, zur Folge.

Aufgabe der Erfindung ist es daher, eine Federkapsel der eingangs genannten Art zu schaffen, die bei vermindertem Fertigungs- und Montageaufwand einfach und gefahrlos zu fertigen ist und eine Ermüdung der Spiralfeder vor Inbetriebnahme der Aufspulvorrichtung vermeidet.

Zur Lösung dieser Aufgabe ist die Federkapsel der eingangs genannten Art erfindungsgemäß mit im kennzeichnenden Teil des Anspruchs 1 angegebenen Merkmalen ausgestattet.

Ein Vorteil der erfindungsgemäßen Federkapsel liegt darin, daß diese als selbstständige Einheit mit nicht gespannter Spiralfeder vorgefertigt und unabhängig von der Aufspulvorrichtung gelagert werden kann. Die Federkapsel ist auf die montierte Aufspulvorrichtung aufsetzbar, wobei die Spiralfeder in Eingriff mit der Aufspulwelle tritt. Nach Festlegung der Federkapsel an der Aufspulvorrichtung wird die Spiralfeder durch Verdrehung der Abdeckkappe gegenüber der Lagerplatte gespannt, woraufhin die Abdeckkappe in fester Relativstellung zur Lagerplatte festgelegt wird. Somit wird eine vorzeitige Ermüdung der Voranbringung der Aufspulvorrichtung lagernden Spiralfeder vermieden und die Herstellung des Eingriffs zwischen der Aufspulwelle und der Spiralfeder kann bei geschlossener Federkapsel vor dem Spannen der Spiralfeder erfolgen, wodurch das Verletzungsrisiko praktisch fortfällt.

Vorteilhafte weitere Ausgestaltungen der Federkapsel sind in den Unteransprüchen 2 bis 6 beschrieben.

Die Ausbildung der Federkapsel mit ineinanderliegenden, relativ zueinander verdrehbaren ringförmigen Wandstegen von Lagerplatte und Abdeckkappe erlaubt es, die gegenüberliegenden Umfangsflächen der Wandstege mit rückdrehverhindernden Sperrelementen auszurüsten, so daß sich die an der Aufspulvorrichtung montierte Federkapsel in der Art eines Uhrwerks auf die gewünschte Spannung der Spiralfeder aufziehen läßt.

Im folgenden wird eine bevorzugte Ausführungsform der Federkapsel anhand der beigefügten Zeichnungen weiter erläutert.

Es zeigen:

Fig. 1 eine Abdeckkappe mit darin angeordneter Spiralfeder;

Fig. 2 einen Schnitt der Abdeckkappe;

Fig. 3 eine Lagerplatte;

Fig. 4a und b eine seitliche und eine Voderansicht eines Endabschnittes der Aufspulwelle und

Fig. 5 eine Rückansicht der Abdeckkappe.

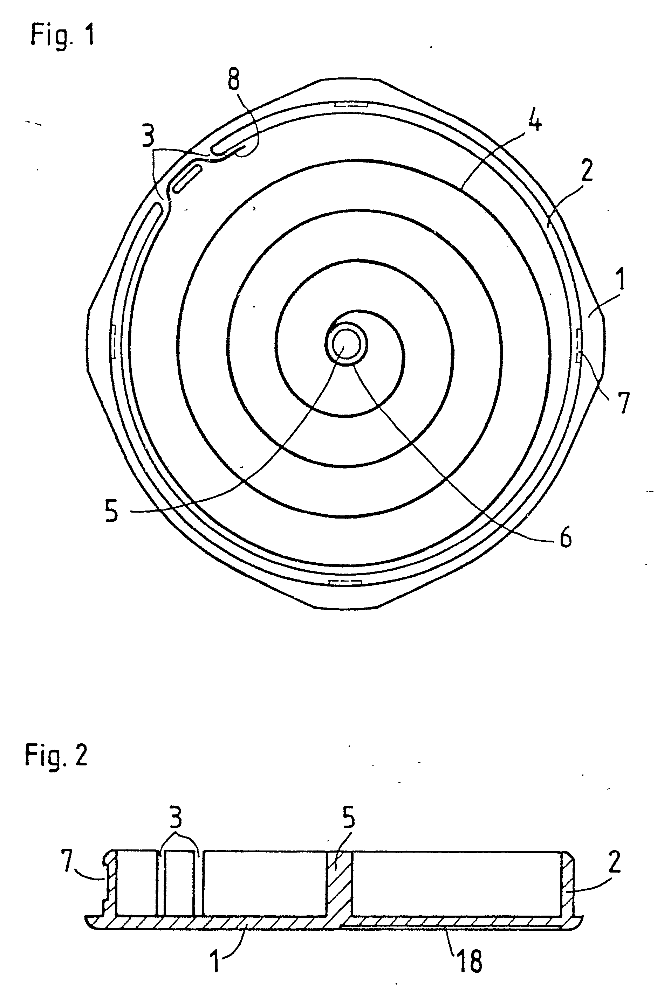

Die in den Figuren 1 bis 5 in ihren Einzelteilen gezeigte Federkapsel wird an einer Sicherheitsgurt-Aufspulvorrichtung angebracht, die eine U-förmig gewinkelte Grundplatte aufweist, zwischen deren Seitenteilen eine Aufspulwelle für den Sicherheitsgurt drehbar gelagert ist. Die Endabschnitte der Aufspulwelle stehen jeweils über die Außenflächen der Grundplatten-Seitenteile vor, wobei ein Endabschnitt der Aufspulwelle mit einer das ungewollte Abspulen des Sicherheitsgurtes verhindernden Abspul-Blockiervorrichtung verbunden ist und die Außenfläche des anderen Seitenteils zur Anbringung der Federkapsel dient. Die in der Federkapsel enthaltene Spiralfeder 4 dient zur automatischen Aufspulung des Sicherheitsgurtes. Sie hat auch in der völlig aufgespulten Stellung des Gurtes eine nicht unerhebliche Vorspannung und wird bei dessen Abspulen darüberhinaus weiter gespannt.

Die Federkapsel umfaßt eine Abdeckkappe 1 mit einem ringförmigen äußeren Wandsteg 2 in dem zur Festlegung des äußeren Endabschnittes 8 der Spiralfeder 4 zwei benachbarte Schlitze 3 vorgesehen sind. Der äußere Endabschnitt 8 der Spiralfeder 4 wird von innen nach aussen und zurück durch die Schlitze 3 geführt und so im Klemmsitz gehalten. Die Spiralfeder 4 liegt im vom Wandsteg 2 umschlossenen Innenraum der Abdeckkappe 1 und weist einen ringförmigen geschlossenen inneren Endabschnitt 6 auf, der über einen mittigen Zentriervorsprung 5 der Abdeckkappe 1 geschoben ist und sich auf diesem drehen kann. An der radialen Außenumfangsfläche des Wandstegs 2 der Abdeckkappe 1 sind vier flache Ausnehmungen 7 in gleichen Umfangsabständen voneinander vorgesehen.

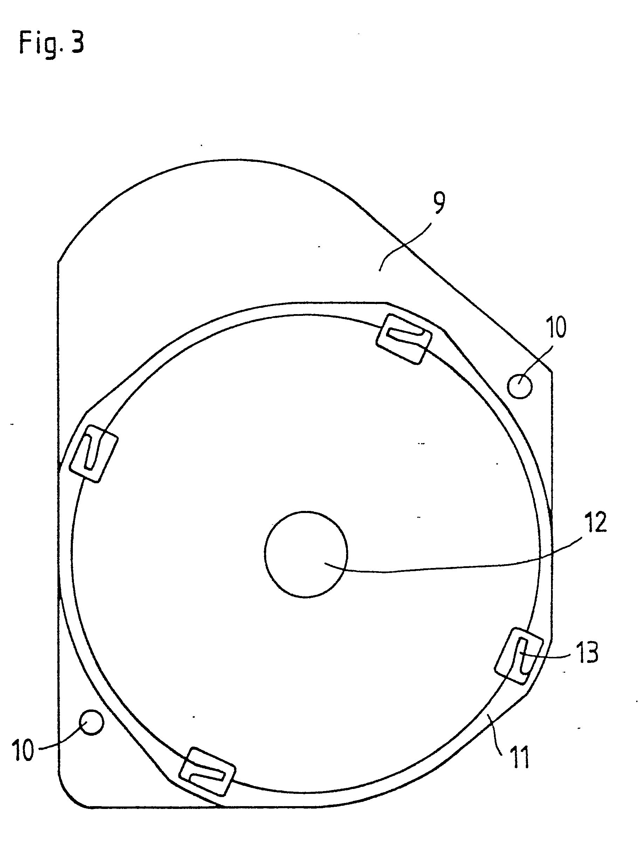

Die Federkapsel umfaßt weiter die in Figur 3 gezeigte Lagerplatte 9, die zwei Bohrungen 10 zur Befestigung an der Aufspulvorrichtung und ebenfalls einen im wesentlichen ringförmigen äußeren Wandsteg 11 aufweist, dessen Durchmesser soviel grösser als der des Wandstegs 2 der Abdeckkappe 1 bemessen ist, daß sich der Wandsteg 2 der Abdeckkappe 1 konzentrisch in den Wandsteg 11 der Lagerplatte 9 einschieben und diesem gegenüber verdrehen läßt. Entsprechend der Verteilung der Ausnehmungen 7 an der radialen Außenumfangsfläche des Wandstegs 2 der Abdeckkappe 1 sind an der radialen Innenumfangsfläche des Wandsteges 11 der Lagerplatte 9 vier leicht über den Umfang vortretende, in eine Umfangsrichtung weisende federnde Zungen 13 vorgesehen, die mit den Ausnehmungen 7 des Wandstegs 2 der Abdeckkappe 1 rückdrehsperrend zusammenwirken können. Weiterhin weist die Lagerplatte 9 eine mittige Öffnung 12 auf.

Zur Montage der Federkapsel wird die Spiralfeder 4 im nur geringfügig gespannten aufgewickelten Zustand in die Abdeckkappe 1 eingelegt, wobei ihr innerer Endabschnitt 6 über den mittigen Zentriervorsprung 5 geschoben und ihr äußerer Endabschnitt 8 in den Schlitzen 3 des Wandstegs 2 festgelegt wird. Nachfolgend wird der Wandsteg 2 der Abdeckkappe 1 konzentrisch in den vom Wandsteg 11 der Lagerplatte 9 eingeschlossenen Raum eingeschoben. In diesem Zustand kann die Federkapsel bis zur Anbringung an der Aufspulvorrichtung gelagert werden.

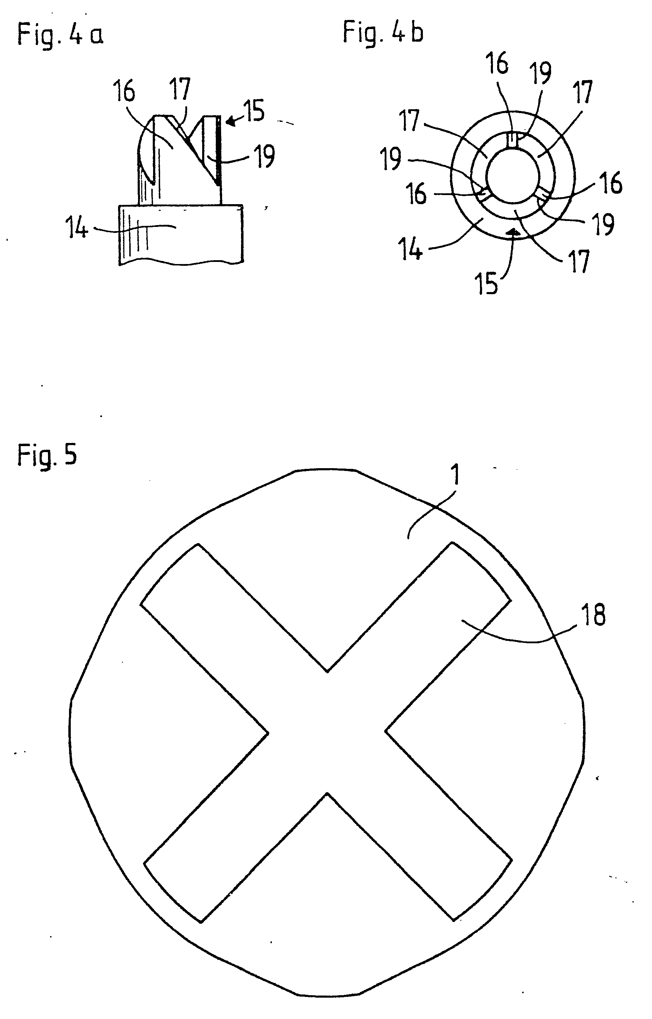

Zur Montage an der Aufspulvorrichtung wird die Federkapsel auf den in den Figuren 4a und 4b schematisch gezeigten, über die Außenfläche des Grundplatten-Seitenteils vorstehenden Endabschnitt 15 der Aufspulwelle 14 so aufgeschoben, daß der Endabschnitt 15 durch die Öffnung 12 der Lagerplatte 9 in die Federkapsel vortritt. Der Endabschnitt 15 der Aufspulwelle 15 weist, wie Figuren 4a und 4b zeigen, drei Mitnehmerklauen 16 auf, die an der Endfläche der Aufspulwelle 14 im Ring angeordnet sind. Jede Mitnehmerklaue 16 weist eine in Umfangsrichtung geschwungen axial abfallende Kantenfläche 17 auf, die in Richtung auf die eine benachbarte Mitnehmerklaue hin verläuft und wendet der von der anderen benachbarten Mitnehmerklaue her auf sie zulaufenden geschwungenen Kantenfläche eine steile axiale Mitnehmerfläche 19 zu.

Bei der Montage der Federkapsel an der Aufspulvorrichtung wird der ringförmige geschlossene innere Endabschnitt 6 der Spiralfeder 4 durch den mittigen Zentriervorsprung 5 der Abdeckkappe 1 in den innerhalb der ringförmig angeordneten Mitnehmerklauen 16 der Aufspulwelle 14 liegenden Raum eingeführt. Dabei tritt der sich direkt an den Endabschnitt 6 anschließende Bereich der Spiralfeder 4 mit einer der Mitnehmerklauen 16 in Eingriff und wird durch die geschwungene Kantenfläche 17 zur Anlage an einer der axialen Mitnehmerflächen 19 geführt. Da der innere Endabschnitt 6 der Spiralfeder 4 gegenüber dem Zentriervorsprung 5 der Abdeckkappe 1 frei drehbar ist, nach erfolgter Montage aber mit der Aufspulwelle 14 kraftschlüssig in Eingriff steht und weiterhin der äußere Endabschnitt 8 der Spiralfeder 4 im Klemmsitz mit dem Wandsteg 2 der Abdeckkappe 1 verbunden ist, wirkt die Federkraft zwischen der Abdeckkappe 1 und der Aufspulwelle 14.

Die Aufspulwelle 14 läßt sich daher unter Federkraft setzen, wenn die Abdeckkappe 1 in Spannungsrichtung der Spiralfeder 4 verdreht wird. Bei dieser Drehung gleiten die in Endspannungsrichtung der Spiralfeder 4 weisenden Zungen 13 des Wandstegs 11 der Lagerplatte i auf dem Außenumfang des Wandstegs 2 der Abdeckkappe 1 und durchlaufen dabei die in diesem vorgesehenen Ausnehmungen 7 federnd.

Eine Rückdrehung der Abdeckkappe 1 gegenüber der Lagerplatte 9 unter der Spannung der Spiralfeder 4 ist nur um höchstens etwa eine Vierteldrehung möglich, bis die Zungen 13 jeweils in eine Ausnehmung 7 eintreten und eine weitere Rückdrehung sperren.

Wie besonders Figur 2 zeigt, erstrecken sich die Ausnehmungen 7 nicht über die volle axiale Höhe des Wandstegs 2 der Abdeckkappe 1; entsprechend ist die axiale Höhe der Zungen 13 bemessen. Ein axiales Herausrutschen der Abdeckkappe 1 aus der Lagerplatte 9 ist daher bei Eingriff der Zungen 13 in die Ausnehmungen 7 nicht möglich.

Besonders um unbefugte Änderungen der Spannung der Spiralfeder 4 durch weiteres Verdrehen der Abdeckkappe 1 über die Sollstellung im Betrieb hinaus und daraus resultierende Beschädigungen der Federkapsel zu verhindern, ist auf der in Figur 5 gezeigten Außenfläche der Abdeckkappe 1 eine flache Vertiefung 18 vorgesehen, in die zur Drehung der Abdeckkappe 1 ein spezielles Drehwerkzeug einzusetzen ist. Die axiale Tiefe der Vertiefung 18 kann so bemessen sein, daß bei Erreichen des der gewünschten Federspannung entsprechenden Drehmoments die Kanten der Vertiefung 18 ausgedreht werden und damit eine weitere Erhöhung der Federspannung ausgeschlossen wird. Alternativ dazu kann auch eine entsprechend flache Erhöhung oder eine zur Verdrehung der Abdeckkappe 1 dienende Umfangsprofilierung vorgesehen werden.

**Patentansprüche**

1. Federkapsel für eine Sicherheitsgurt-Aufspulvorrichtung mit einer zwischen den Seitenteilen einer U-förmig gewinkelten Grundplatte drehbar gelagerten Gurt-Aufspulwelle (14), wobei die Federkapsel eine am Seitenteil der Grundplatte anzubringende Lagerplatte (9) mit einer mittigen Öffnung (12), eine Abdeckkappe (1) und eine zwischen diesen angeordnete Spiralfeder (4) zum Eingriff mit dem die Öffnung (12) der Lagerplatte (9) durchzusetzenden Endabschnitt der Aufspulwelle (14) aufweist, dadurch gekennzeichnet, daß

a) die Abdeckkappe (1) ein Halterungselement (3) für den äußeren Endabschnitt (8) der Spiralfeder (4) sowie einen mittigen Zentriervorsprung (5) für den inneren Endabschnitt (6) der Spiralfeder (4) aufweist,

b) die Spiralfeder (4) einen den Zentriervorsprung (5) umgreifenden Endabschnitt (6) zum Eingriff mit einer im Einbauzustand durch die Öffnung (12) der Lagerplatte (9) in die Federkapsel vortretenden Mitnehmerklaue (16) der Aufspulwelle (14) aufweist und

c) die Abdeckkappe (1) und die Lagerplatte (9) zur Spannung der Spiralfeder (4) relativ zueinander verdrehbar sind und Vorrichtungen (7, 13) zu deren Festlegung in fester Relativstellung zueinander vorgesehen sind.

2. Federkapsel nach Anspruch 1, dadurch gekennzeichnet, daß die Abdeckkappe (1) eine im wesentlichen ringförmigen äußeren Wandsteg (2) aufweist, der zur Halterung des äußeren Endabschnitts (8) der Spiralfeder (4) mit wenigstens einer Durchführöffnung (3) oder Einhängevorrichtung versehen ist.

3. Federkapsel nach Anspruch 1 oder 2, dadurch gekennzeichnet, daß die Lagerplatte (9) und die Abdeckkappe (1) jeweils einen ringförmigen Wandsteg (11 bzw. 2) tragen, wobei der Wandsteg (2) der Abdeckkappe (1) einen geringeren Durchmesser aufweist und konzentrisch in den Wandsteg (11) der Lagerplatte (9) einschiebbar und diesem gegenüber verdrehbar ist.

4. Federkapsel nach Anspruch 3, dadurch gekennzeichnet, daß die Wandstege (11, 2) der Lagerplatte (9) und der Abdeckkappe (1) wenigstens ein rückdrehverhinderndes Sperrelement (7, 13) aufweisen.

5. Federkapsel nach Anspruch 4, dadurch gekennzeichnet, daß die radiale Innenumfangsfläche des Wandstegs (11) der Lagerplatte (9) und/oder radialen Außenumfangsfläche des Wandstegs (2) der Abdeckkappe (1) mit wenigstens einer leicht über den Umfang vortretenden, in eine Umfangsrichtung weisenden federnden Zunge (13) versehen ist und die gegenüberliegende Umfangsfläche des jeweils anderen Wandstegs (2 bzw. 11) wenigstens eine mit der Zunge (13) rückdrehsperrend zusammenwirkende Ausnehmung (7) aufweist.

6. Federkapsel nach einem der Ansprüche 1 bis 5, dadurch gekennzeichnet, daß die Abdeckkappe (1) auf ihrer von der Lagerplatte (9) abgewandten Fläche wenigstens ein Eingriffteil (18) für ein Drehwerkzeug oder eine Umfangsprofilierung aufweist.

**Claims**

1. Spring capsule for a safety belt wind-up device with a belt wind-up shaft (14) rotatably located between the side sections of a base plate angled in U-shaped manner, whereby the spring capsule comprises a mounting plate (9) with a central aperture (12) for attachment to the side section of the base plate, a cap (1) and a helical spring (4) arranged between them for engaging the end section of wind-up shaft (14), which passes through aperture (12) of mounting plate (9), characterised in that

a) cap (1) comprises a holder element (3) for the outer end section (8) of helical spring (4) as well as, in the middle, a centring projection (5) for the inner end section (6) of helical spring (4),

b) helical spring (4) comprises an end section (6) surrounding centring projection (5) for engaging a drive claw (16) of wind-up shaft (14), which in the assembled state projects through aperture (12) of mounting plate (9) into the spring capsule, and

c) cap (1) and mounting plate (9) are capable of being turned in relation to one another with a view to tensioning helical spring (4), devices (7, 13) being provided to lock them in a fixed position relative to one another.

2. Spring capsule according to claim 1, characterised in that cap (1) has a substantially annular outer wall section (2), which, for securing the outer end section (8) of helical spring (4), is provided with at least one feed-through opening (3) or hang-in device.

3. Spring capsule according to claim 1 or 2, characterised in that mounting plate (9) and cap (1) are each provided with an annular wall section (11 and 2, respectively), whereby wall section (2) of cap (1) has the smaller diameter and can be inserted concentrically into wall section (11) of mounting plate (9) and can be turned in relation to the latter.

4. Spring capsule according to claim 3, characterised in that wall sections (11, 2) of mounting plate (9) and cap (1) comprise at least one blocking element (7, 13) which prevents reverse rotation.

5. Spring capsule according to claim 4, characterised in that the radial inner periphery of wall section (11) of mounting plate (9) and/or the radial outer periphery of wall section (2) of cap (1) is provided with at least one resilient tongue (13), which projects slightly beyond the periphery and is orientated in a peripheral direction, and in that the opposite periphery of the wall section (2 or 11, respectively), which in the given case is the other wall section, has at least one recess (7) co-operating with tongue (13) so as to prevent reverse rotation.

6. Spring capsule according to one of claims 1 to 5, characterised in that cap (1) has, on its surface facing away from mounting plate (9) at least one engagement section (18) for a turning tool or is provided with a peripheral profile.

**Revendications**

1. Capsule de ressort pour un dispositif d'enroulement de ceinture de sécurité avec un arbre (14) pouvant pivoter pour l'enroulement de la ceinture et situé entre les joues d'une plaque de base coudée en forme de U; la capsule comprend une plaque d'appui (9) à appliquer sur la joue de la plaque de base et munie d'une ouverture centrale (12), une chape (1) et un ressort spiral (4) installé entre ces deux pièces et destiné à être accroché à la section terminale de l'arbre d'enroulement (14) pénétrant par l'ouverture (12) de la plaque d'appui (9), caractérisé en ce que:

a) la chape (1) comprend un élément de fixation (3) pour la section terminale extérieure (8) du ressort spiral (4) ainsi qu'un téton de centrage central (5) pour la section d'extrémité intérieure (6) du ressort spiral (4),

b) le ressort spiral (4) comprend une section terminale (6) enveloppant le téton de centrage (5) pour s'engager sur une griffe d'entraînement (16) de l'arbre d'enroulement (14) qui au montage pénètre dans la capsule de ressort par l'ouverture (12) de la plaque d'appui (9) et

c) la chape (1) et la plaque d'appui (9) peuvent pivoter relativement l'une par rapport à l'autre pour la mise en tension du ressort spiral (4) et des dispositifs (7, 13) sont prévus pour assurer leur fixation en position stable l'une par rapport à l'autre.

2. Capsule de ressort selon la revendication 1, caractérisée en ce que, la chape (1) comprend une nervure extérieure (2) essentiellement en forme d'anneau, munie d'au moins une ouverture de passage (3) ou d'un dispositif d'accrochage pour la fixation de la section terminale extérieure (8) du ressort spiral (4).

3. Capsule de ressort selon la revendication 1 ou 2, caractérisée en ce que, la plaque d'appui (9) et la chape (1) portent chacune respectivement une nervure (11 ou 2); la nervure (2) de la chape (1) ayant un diamètre plus petit, peut être introduite d'une façon concentrique dans la nervure (11) de la plaque d'appui (9) et peut pivoter par rapport à celle-ci.

4. Capsule de ressort selon la revendication 3, caractérisée en ce que, les nervures (11, 2) de la plaque (9) et de la chape (1) comprennent au moins un élément d'arrêt (7, 13) empêchant la rotation inverse.

5. Capsule de ressort selon la revendication 4, caractérisée en ce que, la surface radiale du pourtour intérieur de la nervure (11) de la plaque d'appui (9) et/ou la surface radiale du pourtour extérieur de la nervure (2) de la chape (1) est munie d'au moins une languette (13) flexible se présentant dans le sens de la circonférence, avançant légèrement au-dessus de la circonférence et la surface de pourtour de l'autre rainure respective (2 ou 11) se trouvant en face comprend au moins un évidement (7) agissant conjointement avec la languette (13) pour éviter la rotation en sens inverse.

6. Capsule de ressort selon l'une ou l'autre des revendications 1 à 5, caractérisée en ce que la chape (1) comprend sur sa surface opposée à la plaque d'appui (9) au moins une zone d'engagement (18) pour un outil de tournage ou un profilage circonférentiel.

Fig. 1

Fig. 2

Fig. 3

Fig. 4 a

Fig. 4 b

Fig. 5